# EUROPÄISCHE PATENTSCHRIFT

(11) **EP 0 561 038 B1**
(45) Veröffentlichungstag und Bekanntmachung des Hinweises auf die Patenterteilung: **19.07.1995**
(21) Anmeldenummer: 92117662.4
(22) Anmeldetag: 16.10.1992
(51) Int. Cl.: F16J 15/32, F16J 15/16

(54) **Dichtung für ein hin- und hergehendes Maschinenteil**
Seal for reciprocating machine parts
Joint pour éléments d'une machine animés dde mouvement alternatif

(30) Priorität: 16.03.1992 DE 4208373
(43) Veröffentlichungstag der Anmeldung: 22.09.1993
(73) Patentinhaber: Firma Carl Freudenberg, 69469 Weinheim (DE)
(72) Erfinder: Schneider, Thomas, W-3550 Marburg/Lahn (DE)

(56) Entgegenhaltungen:
- EP-A- 0 195 115
- GB-A- 1 148 885
- US-A- 3 245 693
- US-A- 4 877 257

## Beschreibung

Die Erfindung betrifft eine Dichtung für ein hin- und hergehendes erstes Maschinenteil, umfassend einen Dichtungskörper aus polymerem Werkstoff, der in einer quer zur Bewegungsrichtung des ersten Maschinenteils geöffneten Nut auf zwei einen axialen Abstand aufweisenden ersten Dichtlippen abgestützt ist und ein zweites Maschinenteil mit zwei einen axialen Abstand aufweisenden zweiten Dichtlippen unter einer radialen Vorspannung berührt, wobei alle Dichtlippen in einer ebenen, gedachten Fläche, die sich senkrecht zur Bewegungsrichtung des Maschinenteils erstreckt, spiegelbildlich zugeordnet sind.

Eine solche Dichtung ist aus der US-A-4 877 257 bekannt. Der Dichteinsatz zum Einsetzen in eine Nut weist Dichtlippen auf, die einerseits am Nutgrund und andererseits an der Oberfläche des abzudichtenden Bauteils dichtend anliegen. Dabei ist allerdings zu beachten, daß die Montage eines derartigen Dichteinsatzes wenig befriedigend ist. Insbesondere in Anwendungsfällen, in denen der Einbauraum für den Dichteinsatz in axialer Richtung sehr klein bemessen ist, können Beschädigungen auftreten, die die Gebrauchseigenschaften während der Gebrauchsdauer beeinträchtigen. Bei auftretendem Verschleiß gestaltet sich das Auswechseln des Dichteinsatzes schwierig.

Der Erfindung liegt die Aufgabe zugrunde, eine Dichtung der vorbekannten Art derart weiterzuentwickeln, daß sich eine deutlich vereinfachte Montage ergibt und dadurch montagebedingte Beschädigungen wesentlich reduziert werden können.

Diese Aufgabe wird erfindungsgemäß mit den kennzeichnenden Merkmalen von Anspruch 1 gelöst. Auf vorteilhafte Ausgestaltungen nehmen zu Unteransprüche Bezug.

Zur Erzielung einer größeren Montagefreundlichkeit und zur Reduzierung montagebedingter Beschädigungen des Dichtungskörpers ist es vorgesehen, daß die ersten Dichtlippen durch einen größeren axialen Abstand voneinander getrennt sind, als die zweiten Dichtlippen und daß der Dichtungskörper an einer Umfangsstelle mit einer Durchtrennung versehen ist. Die Demontage und die Montage des Dichtungskörpers ist bei einem derartig ausgebildeten Dichtungskörper besonders einfach, weil ein Zerlegen der angrenzenden Maschinenteile im Normalfall nicht nötig ist. Durch die Durchtrennung kann der Dichtungskörper in radialer Richtung elastisch aufgeweitet und über das abzudichtende Bauteil, beispielsweise ein Kolbenstange geführt werden, ohne daß diese die ersten Dichtlippen berührt. Der im Vergleich zu den zweiten Dichtlippen vergrößerte axiale Abstand zwischen den ersten Dichtlippen bedingt eine Tellerfederwirkung auf den Nutgrund des den Dichtring umschließenden ersten Maschinenteils, wodurch insgesamt ein besonders gutes Abdichtungsergebnis während einer langen Gebrauchsdauer erzielt werden kann.

Als Vorteilhaft hat es sich bewährt, wenn der axiale Abstand zwischen den ersten Dichtlippen zwei bis vier mal so groß ist, wie der axiale Abstand zwischen den zweiten Dichtlippen. Durch diese Ausgestaltung liegen die zweiten Dichtlippen in axialer Richtung innerhalb der ersten Dichtlippen und werden durch die Tellerfederwirkung von diesen zuverlässig gegen die abzudichtende Fläche des zweiten Maschinenteils gedrückt.

Die ersten Dichtlippen können auf den einander zugewandten Seiten durch Kegelflächen und auf den voneinander abgewandten Seiten durch eine kreisringförmige Fläche begrenzt sein.

Der Verschleiß während einer langen Gebrauchsdauer ist in diesem Falle besonders gering und eine gute radiale Anpressung der ersten Dichtlippen in der Nut gewährleistet.

Die dynamisch beanspruchten zweiten Dichtlippen können in axialer Richtung beiderseits durch Kegelflächen begrenzt sein. Durch die im wesentlichen linienförmige Abdichtung auf einer Umfangskreislinie des abzudichtenden zweiten Maschinenteils ist eine vergleichsweise hohe Flächenpressung gewährleistet, wodurch eine zuverlässige Abdichtung während der gesamten Gebrauchsdauer gewährleistet ist. Die in axialer Richtung beiderseits durch Kegelflächen begrenzten zweiten Dichtlippen passen sich in ausgezeichneter Weise der Oberflächenbeschaffenheit der abzudichtenden Fläche an.

Die ersten Dichtlippen können das relativ zum Dichtungskörper ruhende erste Maschinenteil mit jeweils einer zylindrisch ausgebildeten Fläche berühren. Gemäß einer vorteilhaften Ausgestaltung ist es vorgesehen, daß die ersten Dichtlippen in einem axialen Abstand von den den Dichtungskörper in axialer Richtung begrenzenden Stirnflächen enden und daß der axiale Abstand und die radiale Höhe der ersten Dichtlippen im wesentlichen übereinstimmend sind. Diese Ausgestaltung bedingt eine gute Gebrauchsdauer der Dichtung durch eine formstabile Auslegung der ersten Dichtlippen. Auch bei radialen Verlagerungen von zumindest einem der Maschinenteile und daraus resultierenden Schwankungen des Anpreßdrucks der ersten Dichtlippen auf der abzudichtenden Nut ist mit einer Beschädigung der ersten Dichtlippen und einem Nachlassen der Dichtungswirkung nicht zu rechnen.

Eine weitgehend gleichmäßige Ausnutzung des Werkstoffs des Dichtungskörpers ist gegeben, wenn die zweiten Dichtlippen eine radiale Höhe haben, die mit der radialen Höhe der ersten Dichtlippen im wesentlichen übereinstimmt. Ferner sind vergleichsweise geringe Abmessungen in radialer Richtung hierbei von Vorteil.

Der Dichtungskörper kann an zumindest einer Stirnfläche von zumindest einer in radialer Richtung verlaufenden und in Richtung der Stirnfläche offenen Nut durchbrochen sein, wobei die Nut eine axial gemessene Tiefe aufweisen kann, die nicht größer ist als der axiale Abstand den die ersten Dichtlippen von den jeweils angrenzenden Stirnflächen aufweisen. Eine Schwächung des Dichtungskörpers kann dadurch vermieden werden.

Im Hinblick auf gute Gebrauchseigenschaften hat es sich bewährt, wenn mehrere, gleichmäßig in Umfangsrichtung verteilte Nuten vorgesehen sind. Die Nuten, die als Überströmkanäle ausgebildet sind, bewirken einen Druckausgleich in radialer Richtung, so daß Drucküberhöhungen und damit Verlagerungen des Dichtungskörpers in radialer Richtung und daraus resultierende Undichtigkeiten zuverlässig vermieden werden. Bei der Anordnung der Nuten ist darauf zu achten, daß diese auf beiden Stirnflächen derart angeordnet sind, daß einer Nut auf der einen axialen Stirnfläche keine Nut auf der anderen axialen Stirnfläche gegenüber liegt. Eine übermäßige Schwächung des Querschnitts ist dadurch ausgeschlossen.

Nach einer weiteren vorteilhaften Ausgestaltung ist es vorgesehen, daß zumindest eine Nut radial innen- und außenseitig in einen Mündungstrichter endet. Das Überströmen des abzudichtenden Mediums ist dadurch wesentlich vereinfacht, übermäßige Turbulenzen im Bereich der Nuten treten nicht auf und das abzudichtende Medium neigt durch die ausbleibenden Verwirbelungen nicht zu Schaumbildung.

Im Bereich der Durchtrennung ist der Dichtungskörper mit zwei Enden versehen, die in Umfangsrichtung zugfest ineinander einhakbar sind. Die Montage wird durch diese Ausgestaltung weiter vereinfacht insbesondere dann, wenn der Dichtungskörper in einem axial beweglichen Kolben angeordnet ist und abzudichtendes Medium gegen ein Gehäuse abdichtet. Ein Einschieben des Kolbens mit dem montierten Dichtungskörper in das abzudichtende Gehäuse gestaltet sich dann besonders einfach, da der Dichtungskörper in radialer Richtung nicht mehr auffedern kann.

Im Rahmen der vorliegenden Erfindung ist es vorgesehen, daß die Enden ausschließlich durch sich in radialer Richtung erstreckende Flächen begrenzt sind. Die Herstellbarkeit eines derartigen Dichtungskörpers gestaltet sich dadurch besonders einfach. Eine weitere Vereinfachung bezüglich der Herstellbarkeit und der Montage ergibt sich, wenn die Enden bezogen auf eine gedachte Radialebene, die sich in der Mitte des Profils des Dichtungskörpers befindet, spiegelbildlich ausgebildet ist.

Eines der Enden kann beispielsweise mit einem in Umfangsrichtung vorstehenden Vorsprung versehen sein, der im vorspringenden Bereich in seinem Querschnitt erweitert ist, wobei das andere Ende eine in Umfangsrichtung zurückspringende Nut aufweist, in der der Vorsprung einrastbar ist. Dazu können verschiedene geometrische Ausbildungen vorgesehen sein. Ein Einrasten des Vorsprungs in die zurückspringende Nut ist dann besonders einfach, wenn die Enden in radialer Richtung nicht verlagert werden müssen und ein Einschnappen durch eine nur in Umfangsrichtung wirkende Kraft erfolgen kann.

Die Enden können axial außerhalb der Nut und des Vorsprunges durch sich schräg zur Dichtungsachse erstreckende Flächen begrenzt sein. Bei Beaufschlagung der Dichtung mit Medium aus dem abzudichtenden Raum wird die Dichtungswirkung durch die schräg zur Dichtungsachse angeordneten Flächen und die daraus resultierende große Spaltlänge verbessert.

Gemäß einer vorteilhaften Ausgestaltung ist es vorgesehen, daß der Vorsprung und die Nut ein Profil haben, das in radialer Richtung betrachtet im wesentlichen kreisförmig begrenzt ist. Das Einschnappen des Vorsprungs in die Nut gestaltet sich besonders einfach, da die kreisförmig begrenzten Enden bei der Montage eine Zentrierung der beiden Enden in axialer Richtung zueinander bewirken. Die Nut wird in geringem Maße elastisch in axialer Richtung aufgeweitet, bis der Vorsprung in die Nut eingeschnappt ist. Eine radiale Verlägerung der Enden bei der Montage ist dadruch entbehrlich.

Ein Ausführungsbeispiel der erfindungsgemäßen Dichtung wird nachfolgend anhand der als Anlage beigefügten Zeichnungen weiter verdeutlicht.

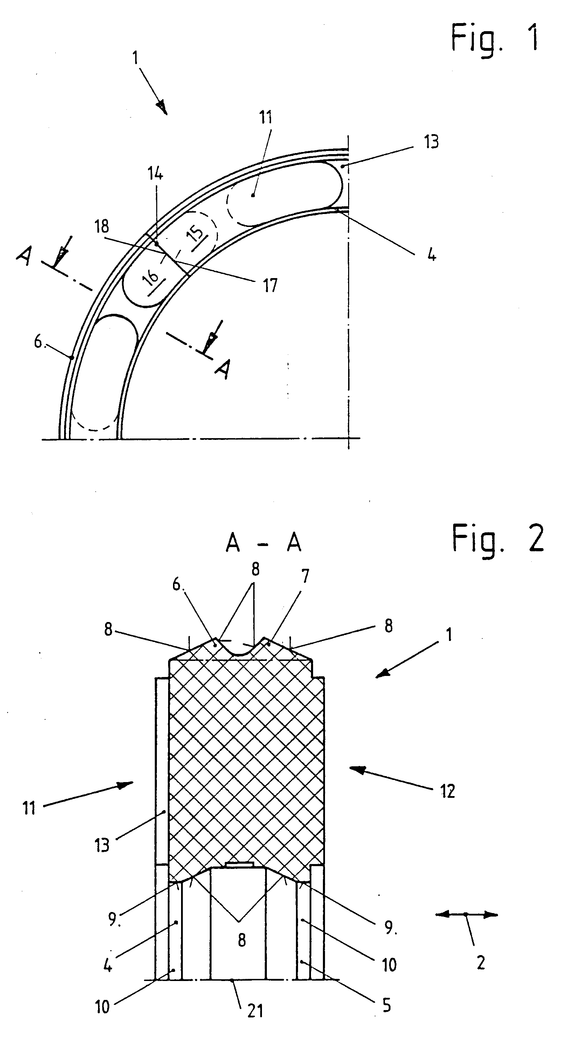

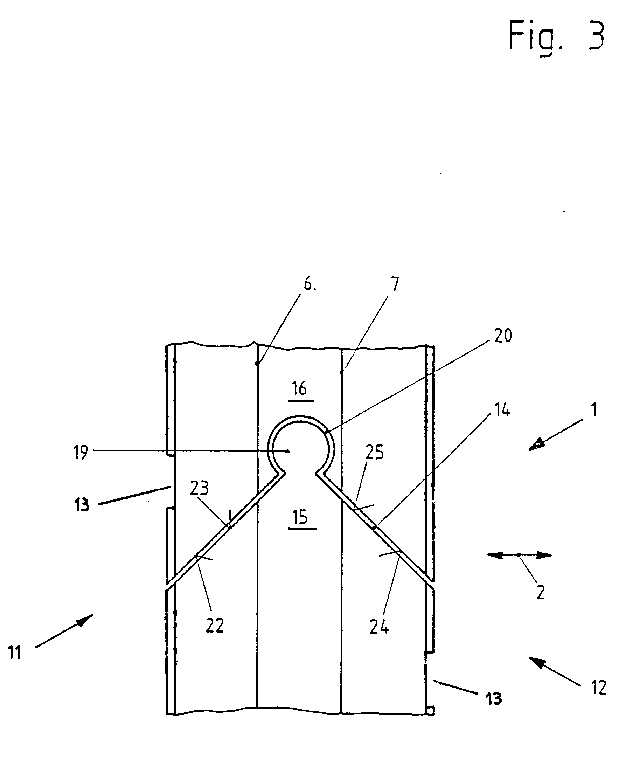

In Figur 1 ist ein Ausführungsbeispiel eines zur Anwendung gelangenden Dichtungskörpers in einer Ansicht gezeigt, in Figur 2 ist der Dichtungskörper in geschnittener Darstellung gezeigt, wobei der Querschnitt zu erkennen ist, und in Figur 3 ist eine Draufsicht auf den Dichtungskörper gemäß Figur 1 im Bereich der Durchtrennung gezeigt, in dem die beiden Enden zugfest ineinander eingehakt sind.

In den Figuren 1 bis 3 ist ein Dichtungskörper 1 aus polymerem Werkstoff dargestellt, der beispielsweise in der Nut eines hier nicht dargestellten Kolbens angeordnet ist. Die beiden ersten Dichtlippen 4, 5 dichten die radiale Begrenzungswand der Nut unter radialer Vorspannung anliegend statisch ab. Die beiden zweiten Dichtlippen 6, 7 bilden die dynamische Abdichtung, die beispielsweise die Wandung einer Gehäusebohrung unter einer radial gerichteten Vorspannung dichtend berühren. Im Rahmen der vorliegenden Erfindung ist es vorgesehen, daß die ersten Dichtlippen 4, 5 einen größeren axialen Abstand voneinander aufweisen, als die zweiten Dichtlippen 6, 7. Der Dichtungskörper 1 ist an einer Umfangsstelle mit einer Durchtrennung 14 versehen, wie in den Figuren 1 und 3 dargestellt. Zur besseren statischen Abdichtung sind die ersten Dichtlippen 4, 5 im Bereich ihrer Auflagefläche in der Nut durch geradlinige Flächen 9 begrenzt, die die Nut mit einer umlaufend ausgebildeten Fläche 10 dichtend berühren. Die dynamische Abdichtung durch die beiden zweiten Dichtlippen 6, 7 erfolgt im wesentlichen entlang von zwei Umfangslinien, wobei die beiden zweiten Dichtlippen 6, 7 in axialer Richtung beiderseits durch Kegelflächen begrenzt sind. Die ersten und zweiten Dichtlippen 4, 5; 6, 7 sind zu einer in axialer Richtung mittig verlaufenden, gedachten Radialebene spiegelbildlich angeordnet. Im Bereich der den Dichtungskörper 1 beiderseits in axialer Richtung begrenzenden Stirnflächen 11, 12 sind Nuten 13 angeordnet, die im wesentlichen in radialer Richtung verlaufen, gleichmäßig in Umfangsrichtung verteilt sind und in radialer Richtung innen- und außenseitig jeweils in einem Mündungstrichter enden.

In Figur 3 ist der Dichtungskörper 1 aus Figur 1 in stark vergrößertem Maßstab dargestellt. Der hier dargestellte Ausschnitt zeigt eine Draufsicht im Bereich der Durchtrennung 14. Die beiden zweiten Dichtlippen 6, 7 weisen einen derartigen axialen Abstand voneinander auf, daß der Vorsprung 19 des einen Endes 15 und die Nut 20 des anderen Endes 16 innerhalb dieses axialen Freiraums angeordnet sind. Die Nuten 13 sind in diesem Ausführungsbeispiel in beiden axialen Stirnflächen 11, 12 angeordnet. Die Durchtrennung 14 ist durch sich schräg zu der Dichtungsachse 21 erstreckende Flächen 22, 23, 24 und 25 begrenzt, so daß sich eine vergleichsweise große Spaltlänge ergibt. Die Leckage bei einem derartig ausgestalteten Dichtungskörper 1 ist vernachlässigbar gering.

In dem hier dargestellten Ausführungsbeispiel ist der in Umfangsrichtung vorstehende Vorsprung 19 des einen Endes 15 dreiviertelkreisförmig ausgebildet, so daß sich im vorspringenden Bereich ein erweiterter Querschnitt ergibt. Die entsprechend ausgebildete, in Umfangsrichtung zurückspringende Nut 20 des anderen Endes 16 ist ebenfalls im wesentlichen kreisförmig begrenzt. Diese Ausgestaltung bietet den Vorteil, daß eine Montage in der Nut beispielsweise eines Kolbens besonders einfach erfolgen kann. Ein Einhaken der beiden Enden 15, 16 ineinander erfolgt nur durch eine Bewegung in Umfangsrichtung aufeinander zu. Eine radiale Verlagerung der Enden 15, 16 zueinander ist entbehrlich. Beim Einschnappen der beiden Enden 15, 16 in Umfangsrichtung ineinander wird der Vorsprung 19 durch den Zentriereffekt und die in Umfangsrichtung betrachtet dachförmige Durchtrennung in der richtigen Position eingeschnappt. Die Durchtrennung 14 ist derart ausgeführt, daß sie jeweils im Bereich der Stirnflächen 11, 12 an der Stelle der größten axialen Ausdehnung beginnt. Ein gutes Abdichtungsergebnis während einer langen Gebrauchsdauer in Verbindung mit einer einfachen Montage werden dadurch bedingt.

## Patentansprüche

1. Dichtung für ein hin- und hergehendes erstes Maschinenteil, umfassend einen Dichtungskörper (1) aus polymerem Werkstoff, der in einer quer zur Bewegungsrichtung des ersten Maschinenteils geöffneten Nut auf zwei einen axialen Abstand aufweisenden ersten Dichtlippen (4, 5) abgestützt ist und ein zweites Maschinenteil mit zwei einen axialen Abstand aufweisenden zweiten Dichtlippen (6, 7) unter einer Vorspannung berührt, wobei alle Dichtlippen in einer ebenen, gedachten Fläche, die sich senkrecht zur Bewegungsrichtung des Maschinenteils erstreckt, spiegelbildlich zugeordnet sind, dadurch gekennzeichnet, daß die ersten Dichtlippen (4, 5) durch einen größeren axialen Abstand voneinander getrennt sind, als die zweiten Dichtlippen (6, 7) und daß der Dichtungskörper (1) an einer Umfangsstelle mit einer Durchtrennung (14) versehen ist.

2. Dichtung nach Anspruch 1, dadurch gekennzeichnet, daß der axiale Abstand zwischen den ersten Dichtlippen (4, 5) zwei bis viermal so groß ist wie der axiale Abstand zwischen den zweiten Dichtlippen (6, 7).

3. Dichtung nach Anspruch 1 bis 2, dadurch gekennzeichnet, daß die ersten Dichtlippen (4, 5) auf den einander zugewandten Seiten durch eine Kegelfläche (8) und auf den voneinander abgewandten Seiten durch eine kreisringförmige Fläche begrenzt sind.

4. Dichtung nach Anspruch 1 bis 3, dadurch gekennzeichnet, daß die zweiten Dichtlippen (6, 7) in axialer Richtung beiderseits durch Kegelflächen (8) begrenzt sind.

5. Dichtung nach Anspruch 1 bis 4, dadurch gekennzeichnet, daß die ersten Dichtlippen (4, 5) das erste Maschinenteil mit einer zylindrisch ausgebildeten Fläche (10) berühren.

6. Dichtung nach Anspruch 1 bis 5, dadurch gekennzeichnet, daß die ersten Dichtlippen (4, 5) in einem axialen Abstand von den den Dichtungskörper (1) in axialer Richtung begrenzenden Stirnflächen (11, 12) enden und daß dieser axiale Abstand und die radiale Höhe der ersten Dichtlippen (4, 5) im wesentlichen übereinstimmend sind.

7. Dichtung nach Anspruch 6, dadurch gekennzeichnet, daß die zweiten Dichtlippen (6, 7) eine radiale Höhe haben, die mit der radialen Höhe der ersten Dichtlippen (4, 5) im wesentlichen übereinstimmt.

8. Dichtung nach Anspruch 6 bis 7, dadurch gekennzeichnet, daß der Dichtungskörper (1) an zumindest einer Stirnfläche (11, 12) von zumindest einer in radialer Richtung verlaufenden und in Richtung der Stirnfläche (11, 12) offenen Nut (13) durchbrochen ist und daß die Nut (13) eine axial gemessene Tiefe hat, die nicht größer ist als der axiale Abstand den die ersten Dichtlippen von den jeweils angeorgenden Stirnflächen aufweisen.

9. Dichtung nach Anspruch 8, dadurch gekennzeichnet, daß mehrere Nuten (13) vorgesehen sind und daß die Nuten (13) gleichmäßig in Umfangsrichtung verteilt sind.

10. Dichtung nach Anspruch 8 bis 9, dadurch gekennzeichnet, daß zumindest eine Nut (13) vorgesehen ist, die radial innen- und außenseitig in einem Mündungstrichter endet.

11. Dichtung nach Anspruch 1 bis 10, dadurch gekennzeichnet, daß der Dichtungskörper (1) im Bereich der Durchtrennung (14) mit zwei Enden (15, 16) versehen ist, die in Umfangsrichtung zugfest ineinander einhakbar sind.

12. Dichtung nach Anspruch 11, dadurch gekennzeichnet, daß die Enden (15, 16) ausschließlich durch sich in radialer Richtung erstreckende Flächen (17, 18) begrenzt sind.

13. Dichtung nach Anspruch 11 bis 12, dadurch gekennzeichnet, daß die Enden (15, 16), bezogen auf eine gedachte Radialebene, die sich in der Mitte der Profils des Dichtungskörpers (1) befindet, spiegelbildlich ausgebildet sind.

14. Dichtung nach Anspruch 13, dadurch gekennzeichnet, daß eines der Enden (15, 16) mit einem in Umfangsrichtung vorstehenden Vorsprung (19) versehen ist, der im vorspringenden Bereich in seinem Querschnitt erweitert ist und daß das andere Ende (16, 15) eine in Umfangsrichtung zurückspringende Nut (20) aufweist, in der der Vorsprung (19) einrastbar ist.

15. Dichtung nach Anspruch 11 bis 14, dadurch gekennzeichnet, daß die Enden (15, 16) axial außerhalb der Nut (20) und des Vorsprungs durch sich schräg zur Dichtungsachse (21) erstreckende Flächen (22, 23, 24, 25) begrenzt sind.

16. Dichtung nach Anspruch 14 bis 15, dadurch gekennzeichnet, daß der Vorsprung (19) und die Nut (20) ein Profil haben, das in radialer Richtung betrachtet, im wesentlichen kreisförmig begrenzt ist.

## Claims

1. A seal for a reciprocating first machine part, comprising a seal body (1) of polymer material, which is supported on two first sealing lips (4, 5), having an axial spacing, in a groove which is open transversely to the direction of movement of the first machine part, and which touches a second machine part, having two second sealing lips (6, 7) with an axial spacing, under a prestress, all the sealing lips being arranged in mirror image in a planar, imaginary surface extending perpendicular to the direction of movement of the machine part, characterized in that the first sealing lips (4, 5) are separated from one another by a larger axial spacing than the second sealing lips (6, 7), and in that the seal body (1) is provided with a separation (14) at a point on the circumference.

2. A seal according to claim 1, characterized in that the axial spacing between the first sealing lips (4, 5) is twice to four times as large as the axial spacing between the second sealing lips (6, 7).

3. A seal according to either of claims 1 and 2, characterized in that the first sealing lips (4, 5) are bounded by a conical surface (8) on the sides facing each other and by a circular surface on the sides facing away from each other.

4. A seal according to any of claims 1 to 3, characterized in that the second sealing lips (6, 7) are bounded in the axial direction by conical surfaces (8) on both sides.

5. A seal according to any of claims 1 to 4, characterized in that the first sealing lips (4, 5) touch the first machine part with a surface (10) of cylindrical shape.

6. A seal according to any of claims 1 to 5, characterized in that the first sealing lips (4, 5) end with an axial spacing from the end faces (11, 12) which bound the seal body (1) in the axial direction, and in that said axial spacing and the radial height of the first sealing lips (4, 5) substantially correspond to each other.

7. A seal according to claim 6, characterized in that the second sealing lips (6, 7) have a radial height which substantially corresponds to the radial height of the first sealing lips (4, 5).

8. A seal according to either of claims 6 and 7, characterized in that the seal body (1) is interrupted at least at one end face (11, 12) by at least one groove (13) which runs in a radial direction and is open in the direction of the end face (11, 12), and in that the groove (13) has a depth, measured axially, which is not greater than the axial spacing which the first sealing lips have from the respectively adjacent end faces.

9. A seal according to claim 8, characterized in that a plurality of grooves (13) are provided, and in that the grooves (13) are distributed uniformly in the circumferential direction.

10. A seal according to either of claims 8 and 9, characterized in that at least one groove (13) is provided, which ends radially on the inside and outside in an outlet funnel.

11. A seal according to any of claims 1 to 10, characterized in that the seal body (1) is provided, in the region of the separation (14), with two ends (15, 16) which can be hooked into one another with tensile strength in the circumferential direction.

12. A seal according to claim 11, characterized in that the ends (15, 16) are bounded solely by surfaces (17, 18) extending in the radial direction.

13. A seal according to either of claims 11 and 12, characterized in that the ends (15, 16) are designed in mirror image in relation to an imaginary radial plane located in the centre of the profile of the seal body (1).

14. A seal according to claim 13, characterized in that one of the ends (15, 16) is provided with a projection (19) which protrudes in the circumferential direction and is widened in its cross-section in the projecting region, and in that the other end (16, 15) has a groove (20) which is set back in the circumferential direction and in which the projection (19) can be engaged.

15. A seal according to any of claims 11 to 14, characterized in that the ends (15, 16) are bounded axially outside the groove (20) and the projection by surfaces (22, 23, 24, 25) extending obliquely to the seal axis (21).

16. A seal according to either of claims 14 and 15, characterized in that the projection (19) and the groove (20) have a profile which, viewed in the radial direction, is bounded in a substantially circular manner.

## Revendications

1. Joint pour un premier élément d'une machine animé d'un mouvement alternatif, comprenant un corps d'étanchéité (1) en matière polymère qui est appuyé, dans une gorge ouverte transversalement à la direction du mouvement du premier élément d'une machine, sur deux premières lèvres d'étanchéité (4, 5) présentant une distance axiale et qui est en contact, et mis en prétension, avec un deuxième élément d'une machine avec deux secondes lèvres d'étanchéité (6, 7) présentant une distance axiale, toutes les lèvres d'étanchéité étant disposées de manière symétrique inversée dans une surface plane imaginaire qui s'étend perpendiculairement à la direction du mouvement de l'élément de la machine, caractérisé en ce que les premières lèvres d'étanchéité (4, 5) sont séparées l'une de l'autre par une distance axiale supérieure à celle des secondes lèvres d'étanchéité (6, 7) et en ce que le corps d'étanchéité (1) présente, à un endroit de sa circonférence, une séparation (14).

2. Joint selon la revendication 1, caractérisé en ce que la distance axiale entre les premières lèvres d'étanchéité (4, 5) est deux à quatre fois plus grande que la distance axiale entre les secondes lèvres d'étanchéité (6, 7).

3. Joint selon l'un des revendications 1 et 2, caractérisé en ce que les premières lèvres d'étanchéité (4, 5) sont limitées, sur les côtés tournés l'un vers l'autre, par une surface conique (8) et, sur les côtés éloignés l'un de l'autre, par une surface en forme d'anneau de cercle.

4. Joint selon l'une des revendications 1 à 3, caractérisé en ce que les secondes lèvres d'étanchéité (6, 7) sont limitées, sur les deux côtés dans la direction axiale, par des surfaces coniques (8).

5. Joint selon l'une des revendications 1 à 4, caractérisé en ce que les premières lèvres d'étanchéité (4, 5) touchent le premier élément d'une machine avec une surface (10) exécutée de manière cylindrique.

6. Joint selon l'une des revendications 1 à 5, caractérisé en ce que les premières lèvres d'étanchéité (4, 5) se terminent à une distance axiale des surfaces frontales (11, 12) limitant le corps d'étanchéité (1) dans la direction axiale et en ce que cette distance axiale coïncide sensiblement avec la hauteur radiale des premières lèvres d'étanchéité (4, 5).

7. Joint selon la revendication 6, caractérisé en ce que les secondes lèvres d'étanchéité (6, 7) ont une hauteur radiale qui concorde sensiblement avec la hauteur radiale des premières lèvres d'étanchéité (4, 5).

8. Joint selon l'une des revendications 6 à 7, caractérisé en ce que le corps d'étanchéité (1) est traversé, sur au moins une surface frontale (11, 12), par au moins une gorge (13) ouverte en direction de la surface frontale (11, 12) et s'étendant dans la direction radiale, et en ce que la gorge (13) a une profondeur, mesurée dans le sens axial, qui n'est pas supérieure à la distance axiale existant entre les premières lèvres d'étanchéité et la surface frontale respective qui leur est contiguë.

9. Joint selon la revendication 8, caractérisé en ce que plusieurs gorges (13) sont prévues et que les gorges (13) sont réparties de manière régulière dans la direction circonférentielle.

10. Joint selon l'une des revendications 8 à 9, caractérisé en ce qu'il est prévu au moins une gorge (13) qui se termine, sur le côté intérieur et sur le côté extérieur dans le sens radial, de manière semblable à un entonnoir formant une embouchure.

11. Joint selon l'une des revendications 1 à 10, caractérisé en ce que le corps d'étanchéité (1) est pourvu, dans la région de la séparation (14), de deux extrémités (15, 16) qui peuvent être accrochées l'une dans l'autre d'une manière résistant à la traction dans la direction circonférentielle.

12. Joint selon la revendication 11, caractérisé en ce que les extrémités (15, 16) sont limitées exclusivement par des surfaces (17, 18) s'étendant dans la direction radiale.

13. Joint selon l'une des revendications 11 à 12, caractérisé en ce que les extrémités (15, 16) sont exécutées de manière symétrique inversée par rapport à un plan radial imaginaire qui se trouve au milieu du profil du corps d'étanchéité (1).

14. Joint selon la revendication 13, caractérisé en ce que l'une des extrémités (15, 16) est pourvue d'une saillie (19) saillant dans la direction circonférentielle et dont la section transversale est élargie dans la région saillante, et en ce que l'autre extrémité (16, 15) est pourvue d'une gorge (20) rentrant en arrière dans la direction circonférentielle et dans laquelle la saillie (19) peut s'enclencher.

15. Joint selon l'une des revendications 11 à 14, caractérisé en ce que les extrémités (15, 16) sont limitées, à l'extérieur de la gorge (20) et de la saillie, dans le sens axial, par des surfaces (22, 23, 24, 25) qui s'étendent de manière oblique par rapport à l'axe (21) du joint.

16. Joint selon l'une des revendications 14 à 15, caractérisé en ce que la saillie (19) et la gorge (20) ont un profil qui, considéré dans la direction radiale, est limité de manière sensiblement circulaire.
